(19) Europäisches Patentamt
European Patent Office
Office européen des brevets

(11) **EP 2 174 746 A1**

(12) **EUROPEAN PATENT APPLICATION**

(43) Date of publication:
**14.04.2010 Bulletin 2010/15**

(51) Int Cl.:
**B23K 35/02** *(2006.01)*   **B23K 35/22** *(2006.01)*
**B23K 35/30** *(2006.01)*   **B23K 35/36** *(2006.01)*
**B23K 35/365** *(2006.01)*

(21) Application number: **09012470.2**

(22) Date of filing: **01.10.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **11.10.2008 JP 2008264685**

(71) Applicant: **Kabushiki Kaisha Kobe Seiko Sho Chuo-ku
Kobe-shi
Hyogo 651-8585 (JP)**

(72) Inventor: **Hidaka, Takeshi
Fujisawa-shi
Kanagawa 251-0014 (JP)**

(74) Representative: **Müller-Boré & Partner
Patentanwälte
Grafinger Strasse 2
81671 München (DE)**

(54) **Low-Hydrogen coated electrode**

(57)    To provide a coated electrode which can obtain a weld metal with excellent cracking resistance and low-temperature toughness in welding of a high-tensile steel with a yield strength of 690 MPa class or more, and which ensures good weldability in all position welding. A coating ratio of a coating flux is 25 to 45 % by mass. A steel core wire contains 0.06 % by mass or less of C relative to the total mass of the steel core wire. The coating flux contains, relative to the total mass of the coating flux, 14.7 to 22.4 % by mass of metal carbonate (in terms of $CO_2$), 13.1 to 24.8 % by mass of $CaF_2$, 0 to 8 % by mass of $TiO_2$, 0 to 8 % by mass of $ZrO_2$, 1.1 to 3.0 % by mass of $SiO_2$, 0 to 0.8 % by mass of $Al_2O_3$, 0.01 to 0.05 % by mass of C, 2.5 to 6.0 % by mass of Si, 2.2 to 8.0 % by mass of Mn, 1.8 to 7.0 % by mass of Ni, and 0.2 to 3.7 % by mass of Cr + Mo, and the balance including Fe, alkali metal fluoride, alkali metal oxide, alkali-earth metal fluoride (except for $CaF_2$), alkali-earth metal oxide, B, Al, and Mg, and inevitable impurities (P, S, V, Nb, Sn). The following formula is satisfied: $D=8.42-0.18 \times CO_2 + 0.05 \times CaF_2 + 0.50 \times TiO_2 - 1.36 \times SiO_2 - 4.36 \times Al_2O_3 + 0.71 \times ZrO_2 \leq 3.8$.

# FIG.1

RELATIONSHIP BETWEEN D VALUE AND DIFFUSIBLE HYDROGEN AMOUNT

EP 2 174 746 A1

**Description**

The present invention relates to a low-hydrogen coated electrode useful for welding a high-tensile steel having a yield strength of 690 MPa class or more. More particularly, the invention relates to a low-hydrogen coated electrode for a high-tensile steel which can obtain a weld bead with excellent cracking resistance and low-temperature toughness and which has good weldability in all position welding.

With the recent tendency toward larger steel structures, reduction in weight of the steel structure has been achieved, and a high-tensile steel is now being applied to the steel structure. In particular, in the fields of marine structures and pressure vessels or the like, good low-temperature toughness is essential, and thus the demand for a welding material satisfying such a property has been grown. Shield metal arc welding, submerged arc welding, and the like have hitherto employed a welding material with good relatively-low-temperature toughness and cracking resistance. However, the welding material has problems associated with weldability, application positions, and the like. In the field of marine structures, an extra-thick high-tensile steel plate having a thickness of 100 mm or more and an yield strength of 690 MPa or more has been frequently used, and hence it is necessary to strictly manage preheating and interpass temperature, and to apply postheating after welding. Thus, the further improvement of cracking resistance is required to reduce the risk of cracking and improve the welding efficiency. In recent years, the overseas construction has become mainstream, in which most of construction works are executed by a DC arc welding method. In the DC arc welding method, the amount of diffusible hydrogen tends to increase as compared to an AC arc welding method, and hence the adequate cracking resistance needs to be ensured at the covered electrode corresponding to a DC power supply. Thus, the development of a low-hydrogen coated electrode for a high-tensile steel for DC specifications is strongly required to provide weld beads with excellent cracking resistance and low-temperature toughness and to have excellent weldability in all position welding.

Various developments have hitherto been performed on low-hydrogen coated electrodes for a high-tensile steel. As one example of the developments, Japanese Unexamined Patent Publication No. 9-327793 discloses a low-hydrogen coated electrode for a high-tensile steel having a tensile strength of 950 MPa class. The content of metal carbonate, metal fluoride, Mg, or the like, and the burning temperature are defined, which can improve the low-temperature toughness due to a decrease in amount of oxygen in weld metal, and can also improve the cracking resistance because of a low content of hydrogen.

Further, Japanese Unexamined Patent Publication No. Hei 11(1999)-123589 discloses a low-hydrogen coated electrode for a high-tensile steel having a tensile strength of 880 MPa or more. The patent document has proposed a method for ensuring good cracking resistance which involves defining an optimal range of composition of metal carbonate, metal fluoride of the electrode, and the like, and further adding an appropriate amount of B thereto for the purpose of suppressing generation and transfer of cracking at a grain boundary due to reduction in grain boundary energy.

Moreover, Japanese Unexamined Patent Publication No. Hei 03(1991)-294088 discloses a low-hydrogen coated electrode for a high-tensile steel having a tensile strength of 70 to 90 $kg/mm^2$ class. The patent document has proposed a method for providing a weld metal with high strength and toughness by minimizing the amount of oxygen in weld metal by addition of SiC and Si thereby to ensure the low-temperature toughness, and further by restricting the amounts of C and Si with a small amount of Nb or V added.

Japanese Unexamined Patent Publication No. Hei 09(1997)-327793 defines appropriate amounts of metal carbonate and metal fluoride such that the amount of diffusible hydrogen in a weld metal can surely be equal to or less than 5 ml/100 g. However, an evaluation reference of 5 ml/100 g or less is insufficient to ensure adequate cracking resistance in welding work, taking into consideration an extra-thick steel plate. Thus, the evaluation based on a stricter evaluation reference should be performed. The patent document fails to focus attention on the relation between a metal oxide content and the amount of diffusible hydrogen in a coating flux, including $SiO_2$, $TiO_2$, $ZrO_2$, or $Al_2O_3$. Further, the composition range of the coating flux is defined because of reasons for arc stability, slag removability, or the like, but the improvement of weldability taking into consideration all position welding has not been studied at all.

In Japanese Unexamined Patent Publication No. Hei 11(1999)-123589, the amount of diffusible hydrogen in a weld metal is 3 to 5 ml/100 g. Such a range of the diffusible hydrogen amount is insufficient so as to surely allow the high-tensile steel having the yield strength of 690 MPa or more to gain the cracking resistance. It is necessary to decrease the amount of diffusible hydrogen in the weld metal to 3 ml/100 g or less. The patent document does not consider the toughness in a low temperature range of about -60 °C, and further never discloses studies about the improvement of weldability taking into consideration all position welding, like Japanese Unexamined Patent Publication No. Hei 09(1997)-327793.

Furthermore, Japanese Unexamined Patent Publication No. Hei 03(1991)-294088 makes an evaluation about the toughness of a weld metal with a tensile strength of 70 to 90 $kg/mm^2$ class in a low temperature range of about -40 °C. However, the weld metal obtained does not sufficiently satisfy recent severe requirements for high toughness, as typified by the toughness in a low temperature range of about - 60 °C. The patent document fails to disclose a structure which can achieve both the low-temperature toughness and the weldability and cracking resistance in all position welding.

In this way, recently, it has been strongly required to develop a low-hydrogen coated electrode for a high-tensile steel that ensures the cracking resistance taking into consideration an extra-thick steel plate, and which satisfies good weldability in all position welding and ensures the satisfactory toughness in the low temperature range. However, the development of a technique for enabling these characteristics at the same time has not been achieved yet.

Accordingly, the invention has been made in view of the forgoing problems, and it is an object of the invention to provide a low-hydrogen coated electrode for high-tensile steel which can obtain a weld metal with excellent cracking resistance and low-temperature toughness in welding of a high-tensile steel with the yield strength of 690 MPa class or more, and which can ensure good weldability in all position welding.

According to the invention, a low-hydrogen coated electrode is provided which includes a steel core wire with a coating flux applied thereto, wherein a coating ratio of the coating flux is 25 to 45 % by mass relative to the total mass of the coated electrode, and the steel core wire contains 0.06 % by mass or less of C relative to the total mass of the steel core wire. The coating flux contains, relative to the total mass of the coating flux, 14.7 to 22.4 % by mass of metal carbonate (in terms of $CO_2$), 13.1 to 24.8 % by mass of $CaF_2$, 1.1 to 3.0 % by mass of $SiO_2$, 0.01 to 0.05 % by mass of C, 2.5 to 6.0 % by mass of Si, 2.2 to 8.0 % by mass of Mn, 1.8 to 7.0 % by mass of Ni, 0.2 to 3.7 % by mass (in total) of Cr + Mo, and at least one selected from the group consisting of 8 % by mass or less of $TiO_2$, 8 % by mass or less of $ZrO_2$, and 0.8 % by mass or less of $Al_2O_3$, the balance including, in addition to Fe, alkali metal fluoride, alkali metal oxide, alkali-earth metal fluoride (except for $CaF_2$), alkali-earth metal oxide, B, Al, or Mg, and 0.1 % by mass or less in total of inevitable impurities. The evitable inevitable impurities include P, S, V, Nb, or Sn. A "D" value represented by the following formula (1) is equal to or less than 3.8:

$$D=8.42-0.18\times[CO_2]+0.05\times[CaF_2]$$
$$+0.50\times[TiO_2]-1.36\times[SiO_2]-4.36\times[Al_2O_3]$$
$$+0.71\times[ZrO_2] \qquad\qquad ...\ (1)$$

where $[CO_2]$, $[CaF_2]$, $[TiO_2]$, $[SiO_2]$, $[Al_2O_3]$, and $[ZrO_2]$ indicate contents of respective compounds.

In this case, a "Z" value represented by the following formula (2) is preferably equal to or less than 20.8:

$$Z=-63.45+1.97\times[CaO]+0.13\times[CaF_2]$$
$$+6.36\times[BaO]-13.52\times[TiO_2]+15.61\times[SiO_2]$$
$$+41.00\times[Al_2O_3]-16.70[ZrO_2] \qquad\qquad ...\ (2)$$

where $[CaO]$, $[CaF_2]$, $[BaO]$, $[TiO_2]$, $[SiO_2]$, $[Al_2O_3]$, and $[ZrO_2]$ indicate contents of respective compounds.

Further, the metal carbonate is preferably calcium carbonate or barium carbonate.

The low-hydrogen coated electrode for a high-tensile steel according to the invention can obtain the excellent weldability in all position welding, while providing the weld metal with good low-temperature toughness and cracking resistance.

Fig. 1 is a graph showing the relationship between a D value and the amount of diffusible hydrogen,

Fig. 2 is a graph showing the relationship between a Z value and a value of H/L x 100, and

Fig. 3 is an exemplary plan view showing an evaluation method of the shape of a bead.

Now, the invention will be described in detail below. The inventors have made various studies about coating flux compositions useful for improvement of cracking resistance of a weld metal obtained by welding with a low-hydrogen coated electrode for a high-tensile steel. As a result, the inventors have found out the relationship between the amount of addition of a slag-making material (metal fluoride, metal carbonate, or metal oxide) in the coating flux and the amount of diffusible hydrogen, and the relationship between the slag-making material in the coating flux and the weldability in all position welding. Further, the relationship between the amount of addition of an alloy component to the coating flux and the strength and low-temperature toughness of the weld metal has been found.

The inventors have found out the fact that the following process is necessary in a weld metal having an yield strength of 690 MPa class in order to obtain the weld metal which can prevent weld cracking at a preheating temperature.

The preheating temperature is set taken into consideration a weld operation, a weld circumstance, and a welding efficiency at an extra-thick steel plate having a thickness exceeding 100 mm. In other words, a preheating temperature is about 100 °C. That is, it is necessary to maintain the amount of diffusible hydrogen in the weld metal to 3 ml/100 g or less as a measurement value obtained by gas chromatograph.

Further, the inventors of the present application have found out that in order to set the amount of diffusible hydrogen in the weld metal to 3 ml/100 g or less, the following means is useful. In other words, the metal carbonate in the coating flux has the operation and effect of being decomposed in an arc to give off $CO_2$ gas, thereby interrupting a molten pool from atmosphere to decrease a partial pressure of hydrogen gas and nitrogen gas in the arc atmosphere, and also of generating a basic slag. As a result of various studies performed by the inventors of the present application, the following fact has been found out. That is, it is effective to limit the metal carbonate contained in the coating flux to $CaCO_3$ and $BaCO_3$, to make a product of the decomposition not containing other hydrophilic metal carbonates ($MgCO_3$ or the like), and to restrict the amount of $CO_2$ in the coating flux to 14.7 % by mass or more.

Not only by optimization of the metal carbonate and metal fluoride in the coating flux, but also by organization of the relationship between the slag-making material containing a metal oxide and the amount of diffusible hydrogen, the influence of the amount of each slag-making material on the diffusible hydrogen is defined by the value D represented by the formula (1). In order to achieve a low hydrogen content of the weld metal, the D value · needs to be equal to or less than 3.8.

In addition to the optimization of the coating flux composition as described above, the combination of a burning temperature, which is higher than the conventional case, is also useful. On the other hand, in evaluating the weldability in all position welding, optimization of the metal carbonate and metal fluoride which are main components is essential. However, only the optimization is not enough to evaluate the weldability in all position welding. The shape of a bead in all position welding, especially, in vertical upward welding, greatly relates to the total amount, viscosity, melting point, and solid-liquid coexistence temperature range or the like of the slag. It is important to define a composition taking into consideration interaction among a metal carbonate, a metal fluoride, and a metal oxide. In the case of an excessively small amount of slag, the absolute amount of slag for suppressing molten metal in the vertical upward welding cannot be secured, which may generate a convex bead or cause drooling.

In contrast, in the case of an excessively large amount of slag, arc is hidden or embedded in the molten slag to degrade the arc stability, which drastically increases the amount of spatter generated. When the viscosity of the slag or the melting point of the slag is decreased, the molten slag is less prone to coagulation, making it difficult to suppress the drooping of the molten metal of the slag in the vertical upward welding.

In order to totally evaluate such influences, the relationship between the shape of the bead and the slag-making material containing metal carbonate, metal fluoride, and metal oxide in the coating flux is organized. Thus, the influence of the amount of each slag-making material on the shape of the bead is defined by the value Z represented by the formula (2). The value Z needs to be equal to or less than 20.8 so as to ensure good weldability in all position welding, especially, in the vertical upward welding.

Further, the toughness of the weld metal is affected by interaction between alloy components. Thus, the influences of various respective alloy components of the coating flux on the low-temperature toughness of the weld metal have been examined thereby to obtain the following findings. As the amount of C, Cr, Ti, and/or Mo in the coating flux increases, the toughness of the weld metal tends to decrease in welding the high-tensile steel having an yield strength of 690 MPa class or more. In particular, C or Ti has a great influence on the decrease in toughness. The increase in amount of Ti leads to an increase in amount of solid solution Ti in the weld metal, causing TiC to be precipitated at a reheating portion, resulting in reduction of nucleation ability. Thus, a coarse lath-like bainite structure dominates to greatly reduce the toughness of the weld metal. The term reheating portion as used herein indicates a portion thermally affected in a subsequent weld pass of weld metal. The increase in amount of C generates island-like martensite to degrade the toughness of the weld metal. The addition of Si, Mn, and Ni tends to improve the toughness of the weld metal. In particular, Si and Mn have a strong effect of improving the toughness. The increase in amount of Mn and Si decreases the amount of oxygen in the weld metal, which can ensure the good toughness of the weld metal.

In this way, the optimal compositional range is defined by taking into consideration the relationship among the amounts of metal carbonate, metal fluoride, metal oxide, and diffusible hydrogen of the coating flux, and the shapes of beads in the vertical upward welding. As a result, a weld metal having excellent cracking resistance can be obtained, and further the good weldability can be ensured in all position welding. Additionally, the combination with the optimization of the alloy components as described above can improve the low-temperature toughness.

Based on the foregoing findings, the invention is to solve the above-mentioned problems by optimization of alloy components in the coating flux and optimization of a composition of a slag-making material.

Now, the reasons for numeric limitations to the low-hydrogen coated electrode according to the invention will be described in detail.

"Coating Ratio: 25 to 45 % by mass"

The coating ratio of the coating flux of the coated electrode is determined by calculating a ratio of the weight of coating flux to the total weight of the electrode x 100 (that is, coating flux weight/total electrode weight x 100). For the coating ratio of less than 25 % by mass, shielding of a molten pool becomes insufficient, and the amounts of N and diffusible hydrogen in the weld metal are increased, which leads to degradation in toughness and cracking resistance of the weld metal. Conversely, for the coating ratio of more than 45 % by mass, arc becomes unstable, and then the shape of a bead becomes defective. Further, the amount of alloy components added from the coating flux to the weld metal is increased, so that the weld metal has excessive strength with degraded cracking resistance and toughness.

" C of Steel Core Wire: 0.06 % by mass or less "

When the C content of the steel core wire exceeds 0.06 % by mass relative to the total mass of the core wire, the C content of the weld metal increases, so that the strength of the weld metal becomes excessive, which cannot prevent cracking at low temperature. Further, the amount of fume and spatter generated increases, so that good weldability cannot be obtained. Therefore, the C content of the steel core wire is limited to 0.06 % by mass or less. The C content of the steel core wire is more preferably in the range from 0.01 to 0.06 % by mass relative to the total mass of the core wire. Examples of the composition of the steel core wire of the coated electrode in the invention are described in Table 4 to be described later, but the invention is not limited thereto. Alternatively, a core wire made of a low-alloy steel containing, for example, Ni, Cr, Mo, or the like may be used depending on the purposes of use.

"Metal Carbonate (in terms of $CO_2$) : 14.7 to 22.4 % by mass"

The reasons for limitations to the coating flux composition will be described below. The content of each component of the coating flux is a content relative to the total mass of the coating flux. In other words, the metal carbonate ($CaCO_3$, $BaCO_3$, or the like) in the coating flux has the effects of being decomposed in an arc to give off $CO_2$ gas, thereby interrupting the molten metal from atmosphere and protecting the metal, and decreasing a partial pressure of hydrogen gas and nitrogen gas in the arc atmosphere. The metal carbonate also has the effect of generating a basic slag. For the content of the metal carbonate in the coating flux of less than 14.7 % by mass in terms of $CO_2$, the amount of generated gas is lacking, and thus good shielding cannot be maintained. As a result, the amounts of hydrogen and nitrogen in the weld metal are increased, which leads to degradation in toughness and cracking resistance. In contrast, when the content of the metal carbonate in the coating flux exceeds 22.4 % by mass in terms of $CO_2$, the arc becomes unstable, which increases the amount of generated spatter. As described above, the metal carbonate content is defined in terms of $CO_2$. In the invention, preferably, the $CaCO_3$ content is in the range of 32 to 48 % by mass, and the $BaCO_3$ content is in the range of 2 to 11 % by mass.

"$CaF_2$: 13.1 to 24.8 % by mass"

The metal fluoride decreases the melting point of the slag to improve fluidity of the weld metal to make the shape of a bead better. Decomposed fluorine reacts with hydrogen in the molten metal and molten slag to decrease a partial pressure of hydrogen gas in the molten metal, thereby lowering the hydrogen content. For the $CaF_2$ content in the coating flux of less than 13.1 % by mass, the viscosity of the molten slag is inadequate, and the shape of the bead becomes deteriorated. In contrast, when the $CaF_2$ content in the coating flux exceeds 24.8 % by mass, the arc stability becomes defective. The $CaF_2$ content is more preferably in the range of 16.2 to 19.8 % by mass. The addition of not only $CaF_2$ but also other metal fluorides (such as $BaF_2$) can also obtain the above-mentioned operation and effect.

"$TiO_2$: 0 to 8 % by mass"

$TiO_2$ can be added as the slag-making material to the coating flux. The addition of an appropriate amount of $TiO_2$ can improve the shape and outer appearance of beads. When the $TiO_2$ content exceeds 8 % by mass, the amount of solid solution Ti in the weld metal is increased, causing TiC to be precipitated at a reheating portion, resulting in reduced nucleation ability. Thus, a coarse lath-like bainite structure dominates to greatly reduce the toughness of the weld metal. Accordingly, the $TiO_2$ content in the coating flux is limited to 8 % by mass or less. In the invention, no addition of $TiO_2$ is better so as to improve the toughness of the weld metal (Kv-60 °C $\geq$ 80J). Even no addition of $TiO_2$ can also ensure the good weldability.

"$ZrO_2$: 0 to 8 % by mass"

$ZrO_2$ can be added as the slag-making material to the coating flux. The addition of an appropriate amount of $ZrO_2$ can improve the shape and outer appearance of beads. For the $ZrO_2$ content of more than 8 % by mass, the slag takes a glassy form, and has degraded slag removability. Accordingly, the $ZrO_2$ content of the coating flux is limited to 8 % by mass or less. In the invention, even no addition of $ZrO_2$ can also ensure the good weldability.

"$SiO_2$: 1.1 to 3.0 % by mass"

It is necessary to add $SiO_2$ as the slag-making material or a binder into the coating flux. For the $SiO_2$ content of more than 3.0 % by mass relative to the total weight of the coating flux, the slag takes the glassy form, resulting in degradation of the slag removability. In contrast, for the $SiO_2$ content of less than 1.1 % by mass, the effect as the slag-making material or binder is difficult to obtain, and the coating quality in real production is degraded, which leads to poor productivity. Accordingly, the $SiO_2$ content of the coating flux is in the range of 1.1 to 3.0 % by mass.

"$Al_2O_3$: 0 to 0.8 % by mass"

$Al_2O_3$ can be added as the slag-making material to the coating flux. When the $Al_2O_3$ content exceeds 0.8 % by mass, the slag takes a glassy form, resulting in degradation of the slag removability. Accordingly, the $Al_2O_3$ content

in the coating flux is equal to or less than 0.8 % by mass. In the invention, no addition of $Al_2O_3$ can also ensure the good weldability. Note that in the invention, at least one of $TiO_2$, $ZrO_2$, and $Al_2O_3$ described above may be contained in the flux.

"C: 0.01 to 0.05 % by mass"

The element C is a very important element so as to ensure the strength of the weld metal. For the C content of less than 0.01 % by mass, an yield strength of 690 MPa class or more cannot be attained. For a C content of more than 0.05 % by mass, the strength of the weld metal becomes too strong, which drastically enhances the sensitivity of low-temperature cracking.

"Si: 2.5 to 6.0 % by mass"

The element Si is an element serving as a deoxidizing agent, and having the effects of ensuring the strength of the weld metal and reducing the amount of oxygen therein. For a Si content of less than 2.5 % by mass, deoxidizing is inadequate, which results in blowholes and poor toughness. In contrast, for a Si content of more than 6.0 % by mass, the viscosity of the weld metal is increased, which leads to degradation in weldability, including deterioration of penetration into a base material. Accordingly, the Si content is in the range of 2.5 to 6.0 % by mass, and more preferably in the range of 3.5 to 4.6 % by mass.

"Mn: 2.2 to 8.0 % by mass"

The element Mn is added as a deoxidizing agent, and effective for improving the toughness of the weld metal, like Si. For a Mn content of less than 2.2 % by mass, deoxidizing is inadequate, which generates blowholes. For a Mn content of more than 8.0 % by mass, the strength of the weld metal is increased, which enhances the sensitivity of low-temperature cracking. Accordingly, the Mn content is in the range of 2.2 to 8.0 % by mass.

"Ni: 1.8 to 7.0 % by mass"

The element Ni is a very important component so as to ensure the strength and toughness of the weld metal. For a Ni content of less than 1.8 % by mass, a sufficient improvement effect of toughness cannot be obtained. For a Ni content of more than 7.0 % by mass, the risk of high-temperature cracking is enhanced. Accordingly, the Ni content is in the range of 1.8 to 7.0 % by mass, and more preferably in the range of 4.5 to 7.0 % by mass.

"Cr + Mo: 0.2 to 3.7 % by mass"

The elements Cr and Mo can stably ensure the strength of the weld metal. When a Cr + Mo content (in adding a single one of Cr and Mo, the amount of the element added, or alternatively in adding a combination of Cr and Mo, the total amount thereof) is less than 0.2 % by mass, the sufficient strength of the weld metal cannot be ensured. In contrast, when the Cr + Mo content exceeds 3.7 % by mass, the strength of the weld metal is increased, while the toughness thereof is degraded, which may cause low-temperature cracking. Accordingly, the Cr + Mo content is in the range of 0.2 to 3.7 % by mass, and more preferably in a range of 1.4 to 1.7 % by mass.

"$D \leq 3.8$"

The D value is calculated by the above-mentioned formula (1). The formula for determining the D value is a formula indicating the relationship between the content of a coating flux composition and the amount of diffusible hydrogen, which is experimentally determined. The relationship formula is obtained by manufacturing several tens of coated electrodes in a composition range of each of various coating fluxes to be described later, measuring the amount of diffusible hydrogen of the weld metal obtained in welding by use of the coated electrode, and calculating the relationship between the measurement result and the coating flux composition by statistical processing. More preferably, the D value is equal to or less than 2.3.

CaO: 15 to 35 % by mass,
BaO: 0 to 10 % by mass,
$CO_2$: 14 to 24 % by mass,
$CaF_2$: 10 to 30 % by mass,
$TiO_2$: 0 to 10 % by mass,
$ZrO_2$: 0 to 10 % by mass,
$SiO_2$: 0.8 to 5.0 % by mass,
$Al_2O_3$: 0 to 1.5 % by mass,
C: 0.01 to 0.05 % by mass,
Si: 2.0 to 8.0 % by mass,
Mn: 1.5 to 10 % by mass,
Ni: 1.0 to 10 % by mass,
Mo: 0 to 5 % by mass,
Cr: 0 to 5 % by mass,
Fe: 2 to 40 % by mass.

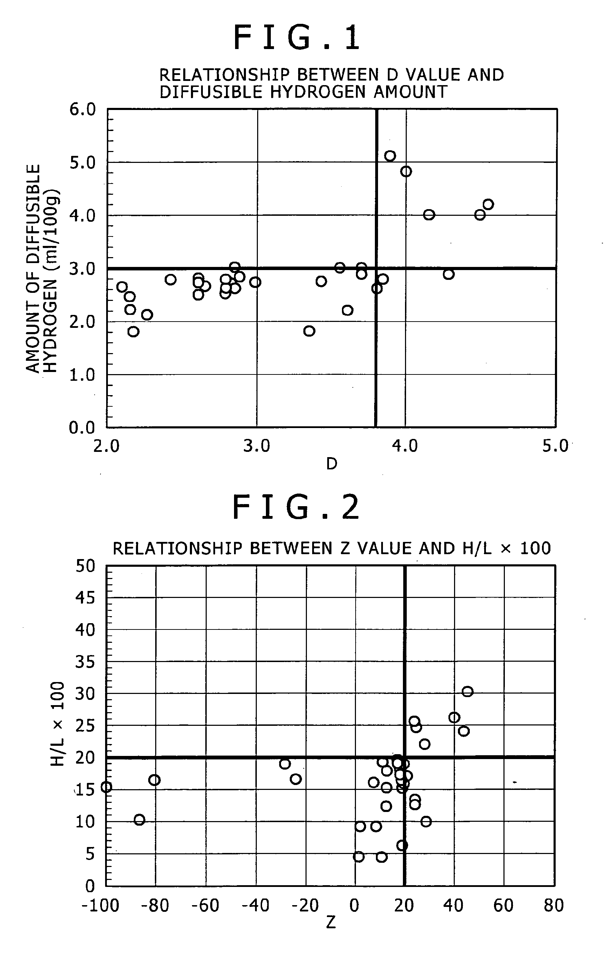

Fig. 1 is a graphic obtained by plotting the amounts of diffusible hydrogen measured in this experiment, with respect to the D values. As can be seen from Fig. 1, for $D \leq 3.8$, the amount of diffusible hydrogen becomes equal to or less than 3.0 ml/100 g. It is shown that in the weld metal of a high-strength steel having a tensile strength of 780 MPa class, decreasing of the hydrogen content required to ensure the good cracking resistance is performed. Thus, the use of the D value can estimate the relationship between the coating flux composition of the low-hydrogen coated electrode for the high-strength steel and the amount of diffusible hydrogen. Setting the D value to 3.8 or less can restrain the amount of hydrogen to a low level which is required to ensure the cracking resistance.

"$Z \leq 20. 8$"

The Z value given by the formula (2) indicates the relationship between the coating flux composition experimentally determined and the bead shape H/L x 100. The formula (2) is obtained by manufacturing several tens of coated electrodes in a composition range of each of various coating fluxes described above, measuring the shape of a weld bead obtained in vertical upward welding by use of the coated electrode, and calculating the relationship between the measurement result and the coating flux composition by statistical processing.

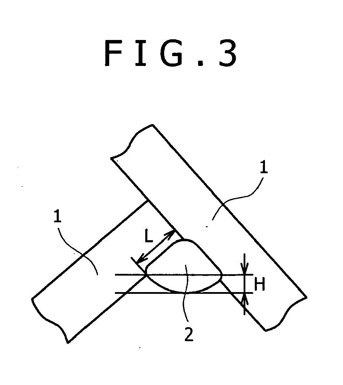

Fig. 3 is an exemplary plan view showing an evaluation method of the shape of a bead. Fillet welding is applied vertically upward to a pair of plates 1 to be welded whose welding lines extend perpendicularly to each other. The leg length L and excess weld metal height H of a fillet weld bead 2 obtained is measured. Based on the ratio $H/L \times 100$ as evaluation reference of the shape of a bead, the relationship between the measurement result of $H/L \times 100$ and the coating flux composition are shown in Fig. 2. As the value of $H/L \times 100$ becomes smaller, the bead is less prone to droop, and the shape of the bead is superior. As shown in Fig. 2, for the value Z of 20.8 or less, the $H/L \times 100$ is equal to or less than 20, so that the excellent shape of bead can be obtained, thus resulting in good weldability. Thus, the use of the Z value can estimate the relationship between the coating flux composition of the low-hydrogen coated electrode for the high-strength steel and the weldability in all position welding. Setting the Z value to 20.8 or less can ensure good weldability. More preferably, the Z value is equal to or less than - 80.8.

"Balance"

In the coated electrode of the invention, the balance includes not only Fe, but also alkali metal fluoride, alkali metal oxide, alkali-earth metal fluoride (except for $CaF_2$), alkali-earth metal oxide, B, Al, or Mg. These elements and compounds may not be contained. The alkali metal fluoride, alkali metal oxide, alkali-earth metal fluoride (except for $CaF_2$), or alkali-earth metal oxide improves the arc stability, and reduces the amount of generated spatter. The element B improves the toughness of the weld metal, and the elements Al and Mg are added thereto as a deoxidizing agent. The coating flux of the invention is allowed to include 0.1 % by mass or less in total of P, S, V, Nb, or Sn as impurities.

Remaining main components of the coating flux of the low-hydrogen coated electrode of the invention is Fe derived from various kinds of Fe alloys (Fe-Si, Fe-Mn, Fe-Cr, Fe-Mo, and the like), and iron powder. The increase in Fe content increases the rate of deposition, thus improving the efficiency of weld work. In the invention, weldability was evaluated at Fe contents in a range of 4.0 to 33.1 % by mass. As a result, in this range, the good weldability can be ensured.

"Others"

The coated electrode of the invention is manufactured by applying the above-mentioned coating flux, and then burning the flux at a temperature of 470 to 540 °C so as to remove moisture.

[Examples]

Now, the results of tests performed to show the effects of the invention will be described below by comparing Examples within the scope of the invention with Comparative Examples departing from the scope of the invention. The following Table 1 shows welding conditions for a flat welding test. The diameter of an electrode was 4.0 mm. The welding position is a flat position, the polarity was DCEP(direct-current electrode positive), and the welding atmosphere was at a temperature of 30 °C, and at a humidity of 80 %. In order to dry the coating flux again, the flux was heated at 350 °C for one hour. A steel sheet under test was JIS G 3128 SHY685 (in a thickness of 20 mm). The shape of a groove was 20° V groove, and a groove gap was 16 mm.

[Table 1]

| Weld current (A) | Arc voltage (V) | Weld speed (mm/min) | Preheating and interpass temperature(°C) | Heat input (kJ/mm) |
|---|---|---|---|---|
| 150 | 23 | 100 | 100 | 2.1 |

The following Table 2 shows welding conditions of a vertical upward fillet weld test. The diameter of the electrode was 4.0 mm. The welding position was a vertical upward position, the preheating temperature was room temperature, and the polarity was DCEP (direct-current electrode positive). In order to dry the coating flux again, the flux was heated at 350 °C for one hour. A steel sheet under test was JIS G 3128 SHY685 (in a thickness of 12 mm). A groove was in the form of T joint, and a groove gap was 0 mm.

[Table 2]

| Weld current (A) | Arc voltage(V) | Weld speed (mm/min) | Heat input (kJ/mm) |
|---|---|---|---|
| 120 | 22 | 80 | 2.0 |

The following Table 3 shows welding conditions for a test of diffusible hydrogen. The diameter of the electrode was 4.0 mm, and the welding position was a flat position. The polarity was DCEP (direct-current electrode positive), and the welding atmosphere was at a temperature of 20 °C and at a humidity of 20 %RH. In order to dry the coating flux again, the flux was heated at 350 °C for one hour.

FTable 3]

| Weld current(A) | Arc voltage (V) | Weld speed (mm/min) |
|---|---|---|
| 150 | 23 | 180 |

The following Table 4 shows compositions (in terms of % by mass) of steel core wires used in the test. The following Tables 5 to 8 show compositions of coating fluxes and D values (in which numeral values for the composition are represented in terms of % by mass). In Table 7, a breakdown of numeral values described in the item of the balance is the total amount of alkali metal fluoride, alkali metal oxide, alkali earth metal fluoride (except for $CaF_2$), alkali earth metal oxide, B, N, and Mg, and inevitable impurities (P, S, V, Nb, and Sn). The amount of inevitable impurities is 0.1 % by mass in total. Therefore, for example, when the balance content is 1.0 % by mass, the total amount of alkali metal fluoride, alkali metal oxide, alkali earth metal fluoride (except for $CaF_2$), alkali earth metal oxide, B, N, and Mg is 0.9 % by mass, and the amount of inevitable impurities is 0.1 % by mass.
Table 8 shows the types A and B of steel core wires used in Examples and Comparative Examples. The compositions of steel core wires A and B are shown in Table 4 below. Other components of the coating flux are P, S, Al, Nb, and V.
Table 9 shows the results of the test in flat position welding. Table 10 shows the results of the test in vertical upward welding. The amount of diffusible hydrogen is shown in Table 8.

[Table 4]

| Steel core wire type | Steel core wire composition (% by mass) | | | | | | |
|---|---|---|---|---|---|---|---|
| | C | Si | Mn | P | S | N | Fe |
| A | 0.01 | 0.01 | 0.40 | 0.003 | 0.001 | 0.0023 | balance |
| B | 0.06 | 0.06 | 0.60 | 0.005 | 0.003 | 0.0050 | balance |

[Table 5]

| | No. | $CaCO_3$ | $CaF_2$ | $BaCO_3$ | $TiO_2$ | $SiO_2$ |
|---|---|---|---|---|---|---|
| Example | 1 | 38.8 | 20.9 | 6.1 | 0.0 | 2.9 |
| | 2 | 37.0 | 22.8 | 6.1 | 0.0 | 2.9 |
| | 3 | 34.8 | 24.8 | 6.1 | 0.0 | 3.0 |
| | 4 | 40.4 | 21.5 | 5.7 | 0.0 | 2.8 |
| | 5 | 32.1 | 19.0 | 2.6 | 0.0 | 2.9 |
| | 6 | 40.4 | 21.5 | 5.7 | 0.0 | 2.8 |
| | 7 | 42.0 | 13.1 | 10.0 | 6.0 | 1.1 |
| | 8 | 40.4 | 21.5 | 5.7 | 0.0 | 2.8 |
| | 9 | 46.4 | 15.0 | 5.9 | 8.0 | 2.8 |
| | 10 | 41.8 | 16.3 | 6.3 | 0.0 | 2.8 |
| | 11 | 41.8 | 16.3 | 6.3 | 0.0 | 2.8 |
| | 12 | 41.8 | 17.0 | 6.3 | 0.0 | 2.8 |
| | 13 | 41.8 | 16.3 | 6.3 | 0.0 | 2.8 |
| | 14 | 41.8 | 16.3 | 6.3 | 0.0 | 2.8 |
| | 15 | 41.6 | 18.3 | 5.9 | 4.8 | 2.8 |
| | 16 | 35.7 | 13.1 | 4.2 | 0.5 | 1.2 |
| | 17 | 45.4 | 13.1 | 10.6 | 0.0 | 2.5 |
| | 18 | 44.3 | 19.8 | 5.3 | 0.0 | 2.8 |
| | 19 | 45.2 | 18.1 | 5.4 | 0.0 | 2.8 |
| | 20 | 45.2 | 16.3 | 5.8 | 0.0 | 2.8 |
| | 21 | 45.2 | 16.3 | 5.8 | 0.0 | 2.8 |
| | 22 | 47.1 | 18.0 | 5.2 | 0.0 | 2.8 |
| | 23 | 48.2 | 16.2 | 5.3 | 0.0 | 2.8 |
| | 24 | 39.3 | 13.5 | 10.6 | 0.5 | 2.0 |
| Comparative Example | 25 | 34.8 | 25.2 | 6.1 | 0.0 | 3.2 |
| | 26 | 39.5 | 13.4 | 5.4 | 11.0 | 1.3 |
| | 27 | 39.5 | 13.4 | 10.6 | 5.0 | 1.3 |
| | 28 | 39.5 | 13.4 | 10.6 | 5.0 | 1.3 |
| | 29 | 35.7 | 13.5 | 10.7 | 0.0 | 2.0 |
| | 30 | 42.0 | 13.1 | 10.0 | 6.0 | 1.2 |
| | 31 | 38.8 | 20.9 | 6.1 | 0.0 | 2.9 |
| | 32 | 41.8 | 16.3 | 6.3 | 0.0 | 2.8 |
| | 33 | 35.9 | 18.3 | 4.1 | 1.8 | 1.0 |
| | 34 | 43.0 | 13.5 | 6.4 | 0.5 | 1.3 |
| | 35 | 32.3 | 20.0 | 1.7 | 5.0 | 1.3 |
| | 36 | 48.0 | 18.0 | 9.7 | 3.0 | 1.3 |
| | 37 | 42.9 | 12.5 | 5.2 | 0.5 | 2.0 |

**EP 2 174 746 A1**

[Table 6]

| | No. | $Al_2O_3$ | $ZrO_2$ | Fe | C | Si |
|---|---|---|---|---|---|---|
| Example | 1 | 0.4 | 3.4 | 10.6 | 0.01 | 5.2 |
| | 2 | 0.5 | 3.3 | 12.0 | 0.03 | 4.2 |
| | 3 | 0.5 | 3.4 | 12.2 | 0.04 | 6.0 |
| | 4 | 0.4 | 3.2 | 11.6 | 0.01 | 4.0 |
| | 5 | 0.0 | 0.8 | 26.4 | 0.01 | 4.4 |
| | 6 | 0.4 | 3.2 | 11.2 | 0.01 | 4.1 |
| | 7 | 0.8 | 0.1 | 11.8 | 0.01 | 4.9 |
| | 8 | 0.4 | 3.2 | 11.5 | 0.01 | 5.9 |
| | 9 | 0.4 | 0.0 | 8.1 | 0.04 | 6.0 |
| | 10 | 0.4 | 3.5 | 20.0 | 0.02 | 2.5 |
| | 11 | 0.4 | 3.5 | 11.2 | 0.05 | 5.5 |
| | 12 | 0.4 | 3.8 | 4.5 | 0.04 | 5.9 |
| | 13 | 0.4 | 3.5 | 10.1 | 0.05 | 6.0 |
| | 14 | 0.4 | 3.5 | 9.0 | 0.01 | 6.5 |
| | 15 | 0.4 | 0.0 | 10.2 | 0.01 | 4.4 |
| | 16 | 0.2 | 0.0 | 33.1 | 0.01 | 3.0 |
| | 17 | 0.8 | 8.0 | 7.8 | 0.01 | 2.5 |
| | 18 | 0.4 | 3.0 | 13.2 | 0.03 | 3.5 |
| | 19 | 0.4 | 3.1 | 11.0 | 0.04 | 4.6 |
| | 20 | 0.4 | 3.2 | 13.0 | 0.02 | 3.7 |
| | 21 | 0.4 | 3.2 | 15.1 | 0.03 | 3.6 |
| | 22 | 0.4 | 2.9 | 12.0 | 0.04 | 3.8 |
| | 23 | 0.4 | 3.0 | 4.0 | 0.03 | 5.4 |
| | 24 | 0.4 | 2.1 | 16.8 | 0.01 | 3.1 |
| Comparative Example | 25 | 0.5 | 4.0 | 7.3 | 0.04 | 5.4 |
| | 26 | 0.8 | 0.0 | 19.9 | 0.01 | 2.0 |
| | 27 | 0.8 | 0.0 | 15.2 | 0.01 | 2.0 |
| | 28 | 0.8 | 0.0 | 13.0 | 0.01 | 2.5 |
| | 29 | 0.8 | 10.5 | 15.1 | 0.01 | 2.5 |
| | 30 | 1.0 | 0.1 | 14.5 | 0.01 | 2.1 |
| | 31 | 0.4 | 3.4 | 10.6 | 0.00 | 5.2 |
| | 32 | 0.4 | 3.5 | 9.1 | 0.08 | 6.0 |
| | 33 | 0.3 | 0.0 | 22.1 | 0.01 | 4.4 |
| | 34 | 0.3 | 2.2 | 18.6 | 0.01 | 3.0 |
| | 35 | 0.3 | 4.0 | 17.5 | 0.02 | 7.1 |
| | 36 | 0.3 | 0.0 | 12.1 | 0.01 | 2.0 |
| | 37 | 0.2 | 0.0 | 23.0 | 0.01 | 4.4 |

[Table 7]

| | No. | Mn | Ni | Cr | Mo | Balance |
|---|---|---|---|---|---|---|
| Example | 1 | 4.6 | 4.7 | 0.6 | 1.2 | 0.7 |
| | 2 | 4.2 | 4.5 | 0.7 | 1.1 | 0.8 |
| | 3 | 4.2 | 3.2 | 0.1 | 1.1 | 0.6 |
| | 4 | 4.6 | 2.0 | 1.4 | 1.5 | 1.0 |
| | 5 | 4.0 | 5.4 | 0.0 | 2.0 | 0.4 |
| | 6 | 4.0 | 4.6 | 0.4 | 1.1 | 0.7 |
| | 7 | 4.1 | 4.0 | 0.4 | 1.0 | 0.8 |
| | 8 | 5.1 | 2.0 | 1.1 | 0.1 | 0.4 |
| | 9 | 2.3 | 3.0 | 1.4 | 0.1 | 0.5 |
| | 10 | 2.3 | 1.8 | 1.7 | 0.0 | 0.6 |
| | 11 | 6.5 | 4.0 | 0.5 | 0.6 | 0.6 |
| | 12 | 8.0 | 6.5 | 1.0 | 1.1 | 0.9 |
| | 13 | 6.3 | 5.2 | 0.1 | 1.1 | 0.1 |
| | 14 | 6.3 | 5.0 | 0.1 | 1.5 | 0.5 |
| | 15 | 5.0 | 4.2 | 0.6 | 1.3 | 0.5 |
| | 16 | 3.6 | 3.9 | 0.2 | 1.0 | 0.2 |
| | 17 | 3.3 | 5.1 | 0.2 | 0.1 | 0.6 |
| | 18 | 2.2 | 2.0 | 2.6 | 0.0 | 0.9 |
| | 19 | 4.0 | 2.0 | 2.0 | 0.7 | 0.7 |
| | 20 | 3.2 | 2.0 | 2.5 | 1.2 | 0.7 |
| | 21 | 4.0 | 3.0 | 0.1 | 0.1 | 0.4 |
| | 22 | 3.6 | 2.0 | 0.4 | 1.3 | 0.5 |
| | 23 | 6.0 | 7.0 | 0.7 | 0.4 | 0.6 |
| | 24 | 4.5 | 5.1 | 0.2 | 1.0 | 0.9 |
| Comparative Example | 25 | 9.0 | 3.1 | 0.1 | 0.5 | 0.8 |
| | 26 | 3.5 | 2.5 | 0.0 | 0.0 | 0.7 |
| | 27 | 3.5 | 4.1 | 2.0 | 2.0 | 0.7 |
| | 28 | 3.3 | 9.0 | 0.4 | 0.4 | 0.9 |
| | 29 | 3.3 | 5.0 | 0.1 | 0.2 | 0.6 |
| | 30 | 4.1 | 4.0 | 0.4 | 1.0 | 0.6 |
| | 31 | 4.6 | 4.7 | 0.6 | 1.2 | 0.7 |
| | 32 | 6.3 | 5.2 | 0.1 | 1.1 | 1.0 |
| | 33 | 5.0 | 4.2 | 0.6 | 1.3 | 1.0 |
| | 34 | 4.5 | 5.0 | 0.2 | 1.0 | 0.4 |
| | 35 | 4.2 | 4.3 | 0.4 | 1.1 | 0.8 |
| | 36 | 3.4 | 1.5 | 0.2 | 0.2 | 0.3 |
| | 37 | 1.8 | 5.1 | 0.6 | 1.2 | 0.6 |

[Table 8]

| | No. | $CO_2$ (% by mass) | Cr+Mo (% by mass) | Steel core wire type | D | Diffusible hydrogen amount (ml/100g) |
|---|---|---|---|---|---|---|
| Example | 1 | 18.4 | 1.8 | A | 2.9 | 2.8 |
| | 2 | 17.6 | 1.8 | A | 2.6 | 2.8 |
| | 3 | 16.7 | 1.2 | A | 2.8 | 2.7 |
| | 4 | 19.0 | 2.9 | A | 2.8 | 2.8 |
| | 5 | 14.7 | 2.0 | A | 3.3 | 1.8 |
| | 6 | 19.0 | 1.5 | A | 2.8 | 2.7 |
| | 7 | 20.7 | 1.4 | A | 3.4 | 2.8 |
| | 8 | 19.0 | 1.2 | B | 2.8 | 2.7 |
| | 9 | 21.8 | 1.5 | B | 3.7 | 3.0 |
| | 10 | 19.8 | 1.7 | B | 2.6 | 2.5 |
| | 11 | 19.8 | 1.1 | B | 2.6 | 2.7 |
| | 12 | 19.8 | 2.1 | B | 2.9 | 2.6 |
| | 13 | 19.8 | 1.2 | B | 2.6 | 2.7 |
| | 14 | 19.8 | 1.6 | B | 2.6 | 2.5 |
| | 15 | 19.6 | 1.9 | B | 2.6 | 2.7 |
| | 16 | 16.7 | 1.2 | B | 3.8 | 2.7 |
| | 17 | 22.3 | 0.3 | A | 3.8 | 2.8 |
| | 18 | 20.7 | 2.6 | B | 2.3 | 2.1 |
| | 19 | 21.1 | 2.7 | B | 2.2 | 1.8 |
| | 20 | 21.2 | 3.7 | B | 2.1 | 2.5 |
| | 21 | 21.2 | 0.2 | B | 2.1 | 2.2 |
| | 22 | 21.9 | 1.7 | B | 1.9 | 1.7 |
| | 23 | 22.4 | 1.1 | B | 1.8 | 2.1 |
| | 24 | 19.6 | 1.2 | A | 2.8 | 3.0 |
| Comparative Example | 25 | 16.7 | 0.6 | B | 3.0 | 2.7 |
| | 26 | 18.6 | 0.0 | A | 6.0 | 2.6 |
| | 27 | 19.7 | 4.0 | A | 2.8 | 2.5 |
| | 28 | 19.7 | 0.8 | A | 2.8 | 2.8 |
| | 29 | 18.1 | 0.3 | A | 7.1 | 2.8 |
| | 30 | 20.7 | 1.4 | A | 2.4 | 2.8 |
| | 31 | 18.4 | 1.8 | B | 2.9 | 2.8 |
| | 32 | 19.8 | 1.2 | B | 2.6 | 2.7 |
| | 33 | 16.7 | 1.9 | B | 4.6 | 4.2 |
| | 34 | 20.4 | 1.2 | A | 4.2 | 4.0 |
| | 35 | 14.6 | 1.5 | A | 9.1 | 4.5 |
| | 36 | 23.3 | 0.4 | A | 3.6 | 3.0 |
| | 37 | 20.0 | 1.8 | B | 2.1 | 2.7 |

[Table 9]

| | No. | 0.2 % yield strength (MPa) | Kv-60 °C (J) | Evaluation results of low temperature cracking | Others | Total evaluation |
|---|---|---|---|---|---|---|
| Example | 1 | 701 | 121 | ○ | | ○ |
| | 2 | 774 | 130 | ○ | | ○ |
| | 3 | 730 | 111 | ○ | | ○ |
| | 4 | 767 | 150 | ○ | | ○ |
| | 5 | 798 | 108 | ○ | | ○ |
| | 6 | 767 | 98 | ○ | | ○ |
| | 7 | 752 | 55 | ○ | | ○ |
| | 8 | 706 | 99 | ○ | | ○ |
| | 9 | 735 | 95 | ○ | | ○ |
| | 10 | 717 | 100 | ○ | | ○ |
| | 11 | 743 | 75 | ○ | | ○ |
| | 12 | 823 | 88 | ○ | | ○ |
| | 13 | 770 | 88 | ○ | | ○ |
| | 14 | 778 | 86 | ○ | | ○ |
| | 15 | 771 | 60 | ○ | | ○ |
| | 16 | 744 | 62 | ○ | | ○ |
| | 17 | 741 | 99 | ○ | | ○ |
| | 18 | 748 | 121 | ○ | | ○ |
| | 19 | 751 | 101 | ○ | | ○ |
| | 20 | 781 | 85 | ○ | | ○ |
| | 21 | 696 | 99 | ○ | | ○ |
| | 22 | 721 | 93 | ○ | | ○ |
| | 23 | 803 | 87 | ○ | | ○ |
| | 24 | 721 | 101 | ○ | | ○ |
| Comparative Example | 25 | 897 | 72 | × | Unstable arc Degradation in slag removability | × |
| | 26 | 675 | 38 | ○ | | × |
| | 27 | 865 | 22 | ○ | | × |
| | 28 | 805 | 64 | ○ | High temperature cracking | × |
| | 29 | 739 | 87 | ○ | Degradation in slag removability | × |
| | 30 | 779 | 34 | ○ | Degradation in slag removability | × |

| | | | | , Generation of blowholes | |
|---|---|---|---|---|---|
| 31 | 684 | 116 | ○ | | × |
| 32 | 856 | 74 | × | | × |
| 33 | 771 | 60 | × | Poor productivity | × |
| 34 | 754 | 65 | × | | × |
| 35 | 721 | 40 | × | Poor penetration | × |
| 36 | 705 | 33 | ○ | Unstable arc | × |
| 37 | 786 | 62 | ○ | Generation of blowholes | × |

[Table 10]

| | No. | Require-ment of the invention | CaO(%by mass) | BaO(%by mass) | Z | H/L ×100 | Total evaluation |
|---|---|---|---|---|---|---|---|
| Example | 1 | o | 21.7 | 4.7 | 16.8 | 19.8 | ● |
| | 2 | o | 20.7 | 4.7 | 20.8 | 17.2 | ● |
| | 3 | o | 19.5 | 4.7 | 18.6 | 15.1 | ● |
| | 4 | o | 22.6 | 4.4 | 18.5 | 16.4 | ● |
| | 5 | o | 18.0 | 2.0 | 19.1 | 15.3 | ● |
| | 6 | o | 22.6 | 4.4 | 18.5 | 17.0 | ● |
| | 7 | o | 23.5 | 7.8 | 1.3 | 4.4 | ● |
| | 8 | o | 22.6 | 4.4 | 18.5 | 19.1 | ● |
| | 9 | o | 26.0 | 4.6 | −29.1 | 19.0 | ● |
| | 10 | o | 23.4 | 4.9 | 17.6 | 6.1 | ● |
| | 11 | o | 23.4 | 4.9 | 17.6 | 18.0 | ● |
| | 12 | o | 23.4 | 4.9 | 12.7 | 17.8 | ● |
| | 13 | o | 23.4 | 4.9 | 17.6 | 17.7 | ● |
| | 14 | o | 23.4 | 4.9 | 17.6 | 18.1 | ● |
| | 15 | o | 23.3 | 4.6 | 9.3 | 9.3 | ● |
| | 16 | o | 20.0 | 3.3 | 18.8 | 16.0 | ● |
| | 17 | o | 24.0 | 8.2 | −24.1 | 16.5 | ● |
| | 18 | o | 24.8 | 4.1 | 24.1 | 24.6 | o |
| | 19 | o | 25.3 | 4.2 | 23.8 | 25.5 | o |
| | 20 | o | 25.3 | 4.5 | 23.8 | 13.2 | o |
| | 21 | o | 25.3 | 4.5 | 23.8 | 12.5 | o |
| | 22 | o | 26.4 | 4.0 | 28.0 | 22.2 | o |
| | 23 | o | 27.0 | 4.1 | 27.9 | 40.0 | o |
| | 24 | o | 22.0 | 8.2 | 39.6 | 26.1 | o |
| Comparative Example | 25 | × | 19.5 | 4.7 | 11.8 | 15.1 | × |
| | 26 | × | 22.1 | 4.2 | −87.1 | 10.3 | × |
| | 27 | × | 22.1 | 8.2 | 19.5 | 16.0 | × |
| | 28 | × | 22.1 | 8.2 | 19.5 | 16.5 | × |
| | 29 | × | 20.0 | 8.3 | −80.8 | 16.5 | × |
| | 30 | × | 23.5 | 7.8 | 11.1 | 4.4 | × |
| | 31 | × | 21.7 | 4.7 | 16.8 | 19.2 | × |
| | 32 | × | 23.4 | 4.9 | 17.6 | 17.4 | × |
| | 33 | × | 20.1 | 3.2 | 2.5 | 9.3 | × |
| | 34 | × | 24.1 | 5.0 | 6.7 | 16.0 | × |
| | 35 | × | 18.1 | 1.3 | −118.7 | 12.0 | × |
| | 36 | × | 25.0 | 7.5 | 27.9 | 10.1 | × |
| | 37 | × | 24.0 | 4.0 | 43.6 | 24.0 | × |

The coated electrodes in Examples and Comparative Examples were used to implement welding on welding conditions represented in Table 3, and thus the amount of diffusible hydrogen of each deposited metal was measured. The measurement method was based on JIS Z 3118. When the amount of diffusible hydrogen was equal to or less than 3.0 ml/100 g, the deposited metal was determined to be good. The amounts of the diffusible hydrogen measured are shown in Table 8.

On the welding conditions shown in Table 1, the high-strength steel HT780 was subjected to flat-position welding thereby to manufacture a deposited metal. A specimen for a tensile test (JISZ3111 A1) and a specimen for a Charpy impact test (JISZ3111 A4) were taken from the deposited metal, and then a mechanical test was performed on the specimens. As a result, the 0.2 % yield strength (MPa) and measured value Kv-60°C(J) of the Charpy impact value which were obtained are shown in Table 9. The deposited metal having a 0.2 % yield strength of 690 Mpa or more, and a Charpy impact at -60 °C of 50 J or more can be determined to have the good strength and the toughness. Further, the results of evaluation of low-temperature cracking are shown in Table 9. In a flat-position welding test, an evaluation method for low-temperature cracking was performed as follows. After welding, the weld bead was left for 96 hours, and a backing metal was cut. The presence or absence of defaults on the deposited metal were examined by ultrasonic inspection (JIS Z 3060) and magnetic-particle testing (JIS G 0565).

Further, a fractured surface was observed by a scanning electron microscope (SEM) thereby to examine the form of cracking on the fractured surface. That is, whether or not defects detected by the ultrasonic inspection and magnetic-particle testing were low-temperature cracking (hydrogen cracking) was examined by the · observation under the SEM. In the SEM observation, when the fractured surface is a pseudo-cleavage plane, the low-temperature cracking was determined to exist. As a result, the case of no low-temperature cracking is designated by a mark o, and the case of generation of the low-temperature cracking is designated by a mark x. The results of the evaluation are shown in Table 9. The presence or absence of defects was first examined by both ultrasonic inspection and magnetic-particle testing. When the cracking was found, the form of the fractured surface was observed with the SEM.

Then, the vertical upward fillet welding was performed on welding conditions shown in Table 2 thereby to evaluate weldability in the vertical upward welding. At this time, the leg length L and the excess weld metal height H of the fillet weld bead were measured. In order to evaluate the tendency of drooping of the beads, the value H/L $\times$ 100 was used. The values H/L $\times$ 100 are shown in Table 10. For a H/L $\times$ 100 of 20 or less, the weldability can be determined to be very good (represented by marks "•" in total estimation).

As shown in Table 8, the amount of diffusible hydrogen in each of Examples 1 to 24 was small, for example, equal to or less than 3.0 ml/100 g. Further, as shown in Table 9, in Examples 1 to 24, all of the 0.2 % yield strength (PS), the low-temperature toughness at -60 °C, and resistance to low-temperature cracking obtained were excellent. In contrast, in Comparative Examples 25 to 37, one of these characteristics was low.

Since in Comparative Example 25, the $CaF_2$ content, the $SiO_2$ content, and the Mn content exceeded the respective upper limits within the scope of the invention, the low-temperature cracking was generated, making the arc unstable, degrading in slag removability.

Since in Comparative Example 26, the $TiO_2$ content exceeded the upper limit of the scope of the invention, the Si content and the Cr + Mo content fell below the respective lower limits of the scope of the invention, and the D value exceeded the corresponding upper limit of the scope of the invention. Thus, the 0.2 % yield strength was degraded, and also the Charpy impact value was also degraded.

Since in Comparative Example 27, the Si content fell below the lower limit of the scope of the invention, and the Cr + Mo content exceeded the upper limit of the scope of the invention, the Charpy impact value was degraded.

Since in Comparative Example 28, the Ni content exceeded the upper limit of the scope of the invention, the high-temperature cracking was generated.

Since in Comparative Example 29, the $ZrO_2$ content exceeded the upper limit of the scope of the invention, and the D value exceeded the upper limit of the scope of the invention, the slag removability was degraded.

Since in Comparative Example 30, the $Al_2O_3$ content exceeded the upper limit of the scope of the invention, and the Si content fell below the lower limit of the scope of the invention, the Charpy impact value was degraded, and the slag removability was also degraded, thus generating blowholes.

Since in Comparative Example 31, the C content fell below the lower limit of the scope of the invention, the 0.2 % yield strength was degraded.

Since in Comparative Example 32, the C content exceeded the upper limit of the scope of the invention, the strength of the weld metal became excessive, generating low-temperature cracking.

Since in Comparative Example 33, the $SiO_2$ content fell below the lower limit of the scope of the invention, and the D value exceeded the upper limit of the scope of the invention, the low-temperature cracking was generated, which resulted in poor productivity.

Since in Comparative Example 34, the D value exceeded the upper limit of the scope of the invention, the low-temperature cracking was generated.

Since in Comparative Example 35, the Si content exceeded the scope of the invention, the metal carbonate content (in terms of $CO_2$) fell below the lower limit of the scope of the invention and the D value exceeded the upper limit of the scope of the invention, the Charpy impact value was decreased, which generated the low-temperature cracking, resulting in poor penetration.

Since in Comparative Example 36, the Si content fell below the lower limit of the scope of the invention, the Ni content also fell below the lower limit of the scope of the invention, and the metal carbonate content (in terms of $CO_2$)

exceeded the upper limit of the invention, the Charpy impact value was decreased, making the arc unstable.

Since in Comparative Example 37, the $CaF_2$ content fell below the lower limit of the scope of the invention and the Mn content fell below the lower limit of the scope of the invention, blowholes were generated.

Since in Examples 1 to 17 shown in Table 10, the Z value was equal to or less than 20.8, good weldability was obtained in vertical upward welding, in addition to the effect shown in Table 9. Thus, Examples 1 to 17 which have both the D and Z values satisfying the scope of the invention, can ensure good low-temperature toughness and resistance of low-temperature cracking of the weld metal, and excellent weldability in all position welding. Note that since in Examples 18 to 24 the Z value was not equal to or less than 20.8, the bead shape in all position welding was not best.

**Claims**

1. A low-hydrogen coated electrode, comprising a steel core wire with a coating flux applied thereto,
   wherein a coating ratio of said coating flux is 25 to 45 % by mass relative to the total mass of the coated electrode,
   wherein said steel core wire contains 0.06 %. by mass or less of C relative to the total mass of the steel core wire,
   wherein said coating flux contains, relative to the total mass of the coating flux,
   14.7 to 22.4 % by mass of metal carbonate (in terms of $CO_2$),
   13.1 to 24.8 % by mass of $CaF_2$,
   1.1 to 3.0 % by mass of $SiO_2$,
   0.01 to 0.05 % by mass of C,
   2.5 to 6.0 % by mass of Si,
   2.2 to 8.0 % by mass of Mn,
   1.8 to 7.0 % by mass of Ni,
   0.2 to 3.7 % by mass (in total) of Cr + Mo, and
   at least one selected from the group consisting of 8 % by mass or less of $TiO_2$, 8 % by mass or less of $ZrO_2$, and 0.8 % by mass or less of $Al_2O_3$,
   wherein the balance is allowed to include, in addition to Fe, alkali metal fluoride, alkali metal oxide, alkali-earth metal fluoride (except for $CaF_2$), alkali-earth metal oxide, B, Al, or Mg, and 0.1 % by mass or less in total of inevitable impurities,
   wherein said inevitable impurities include P, S, V, Nb, or Sn, and
   wherein a D value represented by the following formula is equal to or less than 3.8:

$$D = 8.42 - 0.18 \times [CO_2] + 0.05 \times [CaF_2]$$
$$+ 0.50 \times [TiO_2] - 1.36 \times [SiO_2] - 4.36 \times [Al_2O_3]$$
$$+ 0.71 \times [ZrO_2] \qquad \qquad \cdots \ (1)$$

where $[CO_2]$, $[CaF_2]$, $[TiO_2]$, $[SiO_2]$, $[Al_2O_3]$, and $[ZrO_2]$ indicate contents of respective compounds.

2. The low-hydrogen coated electrode according to claim 1, wherein a Z value represented by the following formula is equal to or less than 20.8:

$$Z = -63.45 + 1.97 \times [CaO] + 0.13 \times [CaF_2]$$
$$+ 6.36 \times [BaO] - 13.52 \times [TiO_2] + 15.61 \times [SiO_2]$$
$$+ 41.00 \times [Al_2O_3] - 16.70 \times [ZrO_2]$$

where $[CaO]$, $[CaF_2]$, $[BaO]$, $[TiO_2]$, $[SiO_2]$, $[Al_2O_3]$, and $[ZrO_2]$ indicate contents of respective compounds.

3. The low-hydrogen coated electrode according to claim 1 or 2, wherein the metal carbonate is calcium carbonate or barium carbonate.

EP 2 174 746 A1

# F I G . 1

### RELATIONSHIP BETWEEN D VALUE AND DIFFUSIBLE HYDROGEN AMOUNT

# F I G . 2

### RELATIONSHIP BETWEEN Z VALUE AND H/L × 100

# FIG. 3

Europäisches
Patentamt

European
Patent Office

Office européen
des brevets

## EUROPEAN SEARCH REPORT

Application Number

EP 09 01 2470

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DATABASE WPI Week 198044 Thomson Scientific, London, GB; AN 1980-77859C XP002558800 & JP 55 120497 A (NIPPON STEEL CORP) 16 September 1980 (1980-09-16) * abstract * | 1-3 | INV. B23K35/02 B23K35/22 B23K35/30 B23K35/36 B23K35/365 |
| X | -& JP 55 120497 A (NIPPON STEEL CORP) 16 September 1980 (1980-09-16) * abstract; example A5; table 1 * ----- | 1-3 | |
| X | FR 2 740 063 A1 (KOBE STEEL LTD [JP]) 25 April 1997 (1997-04-25) * abstract; examples F-13; tables 3-7 * * examples W-2; table 1 * * examples 28(W-2+F-13); table 11 * ----- | 1,3 | |
| A | JP 58 053394 A (NIPPON STEEL CORP) 29 March 1983 (1983-03-29) * abstract; example 1; table 1 * ----- | 1-3 | |
| A | JP 02 182396 A (NIPPON STEEL CORP) 17 July 1990 (1990-07-17) * abstract; example 2 * ----- | 1-3 | TECHNICAL FIELDS SEARCHED (IPC) B23K |
| A | JP 01 262094 A (NIPPON STEEL CORP) 18 October 1989 (1989-10-18) * abstract; example 1; table 1 * ----- | 1-3 | |

The present search report has been drawn up for all claims

| Place of search | Date of completion of the search | Examiner |
|---|---|---|
| The Hague | 4 December 2009 | Ugarte, Eva |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 01 2470

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2009

| Patent document cited in search report | | Publication date | Patent family member(s) | | Publication date |
|---|---|---|---|---|---|
| JP 55120497 | A | 16-09-1980 | NONE | | |
| FR 2740063 | A1 | 25-04-1997 | IT<br>JP<br>JP<br>US | MI962136 A1<br>3251505 B2<br>9168891 A<br>5688420 A | 15-04-1998<br>28-01-2002<br>30-06-1997<br>18-11-1997 |
| JP 58053394 | A | 29-03-1983 | JP<br>JP | 1575097 C<br>63058077 B | 20-08-1990<br>14-11-1988 |
| JP 2182396 | A | 17-07-1990 | JP | 2565998 B2 | 18-12-1996 |
| JP 1262094 | A | 18-10-1989 | NONE | | |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9327793 A
- JP HEI111999123589 B
- JP HEI031991294088 B
- JP HEI091997327793 B